(19) Europäisches Patentamt
European Patent Office
Office européen des brevets

(11) Veröffentlichungsnummer: **0 307 880 B1**

# (12) EUROPÄISCHE PATENTSCHRIFT

(45) Veröffentlichungstag der Patentschrift: **12.01.94**

(51) Int. Cl.⁵: **C09K 19/34**

(21) Anmeldenummer: **88115003.1**

(22) Anmeldetag: **14.09.88**

## (54) Flüssigkristalline, insbesondere ferroelektrische flüssigkristalline Mischungen.

(30) Priorität: **19.09.87 DE 3731640**

(43) Veröffentlichungstag der Anmeldung:
**22.03.89 Patentblatt 89/12**

(45) Bekanntmachung des Hinweises auf die Patenterteilung:
**12.01.94 Patentblatt 94/02**

(84) Benannte Vertragsstaaten:
**AT BE CH DE FR GB IT LI NL SE**

(56) Entgegenhaltungen:
**EP-A- 0 293 910**
**EP-A- 0 308 794**
**WO-A-86/04060**

(73) Patentinhaber: **HOECHST AKTIENGESELLSCHAFT**

**D-65926 Frankturt(DE)**

(72) Erfinder: **Dübal, Hans-Rolf, Dr.**
**Heuhohlweg 6**
**D-6240 Königstein/Taunus(DE)**
Erfinder: **Escher, Claus, Dr.**
**Amselweg 3**
**D-6109 Mühltal(DE)**
Erfinder: **Hemmerling, Wolfgang, Dr.**
**Billtalstrasse 32**
**D-6231 Sulzbach (Taunus)(DE)**
Erfinder: **Müller, Ingrid, Dr.**
**Am Pfingstbrunnen 1**
**D-6238 Hofheim am Taunus(DE)**
Erfinder: **Ohlendorf, Dieter, Dr.**
**Am Kühlen Grund 4**
**D-6237 Liederbach(DE)**
Erfinder: **Wingen, Rainer, Dr.**
**Rotkäppchenweg 10**
**D-6234 Hattersheim am Main(DE)**

**EP 0 307 880 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.10/3.9/3.3.3)

## Beschreibung

Ferroelektrische Flüssigkristalle haben in jüngerer Zeit Interesse als Anzeigemedium in elektro-optischen Bauelementen gewonnen (z.B. Lagerwall et al. "Ferroelectric Liquid Crystals for Displays", SID Symposium, October Meeting 1985, San Diego, Ca. USA).

Für die praktische Verwendung von ferroelektrischen Flüssigkristallen in elektro-optischen Anzeigen werden chirale, geneigt-smektische Phasen wie $S_c$-Phasen benötigt [R.B. Meyer, L. Liébert, L. Strzelecki und P. Keller, J. Physique 36, L-69 (1975)], die über einen großen Temperaturbereich stabil sind. Dieses Ziel kann man erreichen mit Verbindungen, die selbst solche Phasen, z.B. $S_c$-Phasen, ausbilden oder aber, indem man nicht chirale, geneigt-smektische Phasen ausbildende Verbindungen mit optisch aktiven Verbindungen dotiert [M. Brunet, Cl. Williams, Ann. Phys. 3, 237 (1978)].

Weiterhin ist bei der Verwendung ferroelektrischer Flüssigkristallmischungen in elektro-optischen Bauelementen eine einheitliche planare Orientierung der Flüssigkristalle notwendig, um ein hohes Kontrastverhältnis zu erzielen. Es hat sich gezeigt, daß sich eine einheitliche planare Orientierung in der $S_c$-Phase erreichen läßt, wenn die Phasenfolge der Flüssigkristallmischung mit abnehmender Temperatur lautet:
Isotrop → nematisch → smektisch A → smektisch C.
(z.B. K. Flatischler et al., Mol. Cryst. Liq. Cryst. 131, 21 (1985); T. Matsumoto et al., p. 468-470, Proc. of the 6th Int. Display Research Conf., Japan Display, 30. September-2. October 1986, Tokyo, Japan; M. Murakami et al., ibid. p. 344-347).

Für ferroelektrische (chiral smektische) Flüssigkristallmischungen muß zusätzlich die Bedingung erfüllt sein, daß die Ganghöhe (pitch) der Helix in der $S_c^*$ -Phase groß, d.h. größer als 5 $\mu$m, und in der N*-Phase sehr groß, d.h. größer als 10 $\mu$m bzw. unendlich ist.

Die optische Schaltzeit $\tau[\mu s]$ ferroelektrischer Flüssigkristallsysteme, die möglichst kurz sein soll, hängt von der Rotationsviskosität des Systems $\gamma$[mPas], der spontanen Polarisation $P_s[nC/cm^2]$ und der elektrischen Feldstärke E[V/m] ab nach der Beziehung

$$\tau \approx \frac{\gamma}{P_S \cdot E}$$

Da die Feldstärke E durch den Elektrodenabstand im elektrooptischen Bauteil und durch die angelegte Spannung festgelegt ist, muß das ferroelektrische Anzeigemedium niedrigviskos sein und eine hohe spontane Polarisation aufweisen, damit eine kurze Schaltzeit erreicht wird.

Schließlich werden neben thermischer, chemischer und photochemischer Stabilität eine kleine optische Anisotropie $\Delta n$, vorzugsweise <0.13, und eine gering positive oder vorzugsweise negative dielektrische Anisotropie $\Delta\epsilon$ verlangt. (S.T. Lagerwall et al., "Ferroelectric Liquid Crystals for Displays" SID Symposium, Oct. Meeting 1985, San Diego, Ca, USA).

Die Gesamtheit dieser Forderungen ist nur mit Mischungen aus mehreren Komponenten zu erfüllen. Als Basis (oder Matrix) dienen dabei bevorzugt Verbindungen, die möglichst selbst bereits die gewünschte Phasenfolge $I \rightarrow N \rightarrow S_A \rightarrow S_c$ aufweisen. Weitere Komponenten der Mischung werden oftmals zur Schmelzpunktserniedrigung und zur Verbreiterung der $S_c$-und meist auch der N-Phase, zum Induzieren der optischen Aktivität, zur pitch-Kompensation und zur Anpassung der optischen und dielektrischen Anisotropie zugesetzt, wobei aber beispielsweise die Rotationsviskosität möglichst nicht vergrößert werden soll.

Einzelne dieser Komponenten und auch bestimmte Mischungen sind bereits aus dem Stand der Technik bekannt. Da aber die Entwicklung, insbesondere von ferroelektrischen Flüssigkristall-Mischungen, noch in keinster Weise als abgeschlossen betrachtet werden kann, sind der Hersteller von Anzeigeelementen ("displays") an unterschiedlichsten Mischungen interessiert. Dies u. a. auch deshalb, weil erst das Zusammenwirken der flüssigkristallinen Mischungen mit den einzelnen Bauteilen der Anzeigeelemente bzw. der Zellen (z. B. der Orientierungsschicht) Rückschlüsse auf die Qualität auch der flüssigkristallinen Mischungen zuläßt. Aufgabe der vorliegenden Erfindung ist es dehalb, Kompositionen aus geeigneten Komponenten für flüssigkristalline, insbesondere ferroeletrische flüssigkristalline Mischungen aufzufinden, die möglichst viele der vorstehend dargestellten Kriterien erfüllen.

Ein Gegenstand der Erfindung sind die nachstehend charakterisierten flüssigkristallinen Mischungen mit einem Gehalt an strukturell ähnlichen Verbindungen (mindestens 2 Komponenten vom Typ a, beispielsweise a′ und a″), die als Matrix (Basis) für ferroelektrische Mischungen geeignet sind.

Ein weiterer Gegenstand der Erfindung sind dann flüssigkristalline Mischungen mit günstigen Werten für die optische und die dielektrische Anisotropie und einer für die praktische Verwendung ausreichend

breiten nematischen Phase, die eine weitere Komponente vom Typ b enthalten.

Noch ein weiterer Gegenstand der Erfindung sind flüssigkristalline Mischungen mit tiefem Schmelzpunkt und tiefem Umwandlungspunkt der unteren Grenze der $S_c$-Phase und breiter $S_c$-Phase, die eine weitere Komponente vom Typ c und/oder d enthalten.

Ein besonders bevorzugter Gegenstand der Erfindung sind ferroelektrische flüssigkristalline Mischungen mit kurzer Schaltzeit, der Phasenfolge $I \rightarrow N^* \rightarrow S_A^*$ , $S_c^*$ , wobei der pitch in der nematischen Phae >15 $\mu$m und in der $S_c^*$ -Phase >5 $\mu$m ist, und einem negativen $\Delta\epsilon$ und $\Delta n$ <0.15.

Es ist bekannt, daß bestimmte Derivate des Phenylpyrimidins, insbesondere 5-Alkyl-2(4-alkyloxy-phenyl)-pyrimidine, $S_c$-, $S_A$- und N-Phasen ausbilden können (D. Demus und H. Zaschke, "Flüssige Kristalle in Tabellen", VEB Deutscher Verlag für Grundstoffindustrie, Leipzig 1974, S. 260-261) und daneben durch Zusatz optisch aktiver Dotierstoffe in ferroelektrische Flüssigkristall-Mischungen umgewandelt werden können [L.M. Blinov et al., Sow. Phys. Usp. 27 (7), 492 (1984); L.A. Beresnew et al., Ferroelectrics, 59 - [321]/1 (1984), vorgetragen auf der 5th. Conference of Soc. Countries on Liquid Crystals, Odessa, UdSSR, Oct. 1983; DE-A 35 15 347, EP-A 0 206 228, EP-A 0 225 195].

Es ist weiter bekannt, daß tiefere Schmelzpunkte und eine Verbreiterung der gewünschen flüssigkristallinen Phasen durch Mischen mehrerer flüssigkristalliner Verbindungen erreicht werden [D. Demus et al., Mol. Cryst. Liq. Cryst. 25, 215 (1974), J.W. Goodby, Ferroelectrics 49, 275 (1983)], und daß die Schmelzpunktsdepression umso ausgeprägter ist, je stärker sich auch die Mischungskomponenten strukturell unterscheiden. (J.S. Dave et al., J. Chem. Soc. 1955, 4305). Es war also davon auszugehen, daß besonders tiefe Mischungsschmelzpunkte und damit tiefe Phasenumwandlungspunkte der $S_c$-Phase erhalten werden, wenn Verbindungen gemischt werden, die sich einerseits strukturell wesentlich unterscheiden, andererseits aber ähnlich genug sind, um gut mischbar zu sein.

Aus der DE-C 22 57 588 ist ein 5-Butyloxy-2(-4-pentyloxy-phenyl)-pyrimidin bekannt, das aber nur eine nematische Phase bildet.

Es wurde nun überraschend gefunden, daß sich als Verbindungen vom Typ a 5-Alkyloxy-2(4-alkyloxy-phenyl)-pyrimidine der allgemeinen Formel (I)

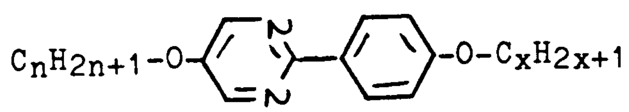

(I),

in der $C_nH_{2n+1}$ und $C_xH_{2x+1}$ geradkettige Alkylreste sind, in denen n eine ganze Zahl von 6 bis 14 und x eine ganze Zahl von 2 bis 14 bedeuten, als Komponenten der Matrix (Basis) für flüssigkristalline, insbesondere ferroelektrische flüssigkristalline Mischungen besonders gut eignen: von ihren sind mindestens 2 unterschiedliche Verbindungen a′ und a″ im Gemisch vorhanden. Sie zeigen größtenteils mit abnehmender Temperatur die erwünschte Phasenfolge $I \rightarrow N \rightarrow S_A \rightarrow S_c$. Im Vergleich zu den bekannten 5-Alkyl-2-(4-alkoxy-phenyl)-pyrimidinen weisen sie erheblich breitere $S_c$-Phasen und höhere Umwandlungstemperaturen des $S_c \rightarrow S_A$-Übergangs auf. Die $S_c$-Phase wird außerdem bereits bei einer niedrigeren Anzahl von C-Atomen in den Alkyl(oxy)ketten gebildet, z.B. bereits dann, wenn n = 8 und x >2 oder n = 6 und x >6 sind. Überraschenderweise ergibt sich daraus für die Mischungsherstellung im Vergleich zu den bekannten 5-Alkyl-2-(4-alkoxy-phenyl)-pyrimidinen eine größere Auswahl an homologen, gut mischbaren Verbindungen mit $S_c$-Phasen. Diese ermöglichen es außerdem aufgrund ihrer höheren Phasenumwandlungstemperaturen $S_A$ nach $S_c$ (z.B. 70 bis 90 °C) und ihrer breiteren $S_c$-Phasen, Mischungen mit sehr breiten $S_c$-Phasen (z.B. bis zu ca. 68 °C) und hohen Umwandlungstemperaturen $S_A/S_c$ herzustellen.

Besonders überraschend und vorteilhaft ist es, daß Mischungen mit tiefem Schmelzpunkt und besonders breiter $S_c$-Phase unter Verbindungen weniger Komponenten erhalten werden, wenn man Verbindungen vom Typ a mischt, bei denen der Alkoxysubstituent am Pyrimidinring konstant bleibt, und nur die Kettenlänge des Alkoxysubstituenten am Phenylring sich jeweils um mindestens den Betrag 2 ändert, d.h. n = const. und x = variabel mit $\Delta x$ mindestens 2. Bevorzugt sind dann Mischungen, die mindestens drei Verbindungen a′, a″ und a‴ vom Typ a enthalten, bei denen n gleich ist und x sich jeweils mindestens um den Betrag $\Delta x$ = 2 unterscheidet; dabei liegt n insbesondere im Bereich zwischen 7 und 14. Der vorteilhafte, sehr große $S_c$-Phasenbereich rührt vermutlich von dem überraschenden Ergebnis her, daß zwar der Schmelzpunkt dieser Mischungen niedrig ist, aber der $S_c/S_A$-Übergang bei sehr hohen Temperaturen erfolgt und nicht oder nur geringfügig durch die erfindungsgemäße Abmischung der Verbindungen abnimmt.

Ein weiterer Vorteil besteht hier darin, daß bei der Herstellung der Verbindungen stets von demselben Phenolkörper

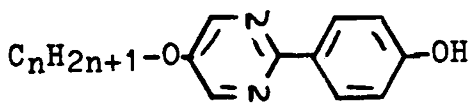

ausgegangen werden kann. Die Herstellung der Verbindungen erfolgt nach der in der DE-C 22 57 588 angegebenen Methode. Die erfindungsgemäßen Mischungen enthalten bevorzugt 20 bis 90 mol% der Verbindungen vom Typ a, bezogen auf die Mischung aller Komponenten.

Die erfindungsgemäßen Mischungen aus Verbindungen der Formel (I) eignen sich bereits sehr gut als Matrix für ferroelektrische flüssigkristalline Mischungen. Sie weisen allerdings noch eine größe optische ($\Delta n$) und eine große positive dielektrische ($\Delta\epsilon$) Anisotropie auf. Außerdem ist die nematische Phase, je nach der Kettenlänge n bzw. x der Substituenten, noch schmal.

Durch Zusatz mindestens einer Verbindung (Cyclohexancarbonsäureester) der allgemeinen Formel (II), d. h. einer Verbindung vom Typ b,

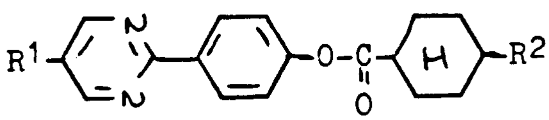 (II)

können überraschenderweise gleichzeitig die Größen [$\Delta n$] und [$\Delta\epsilon$] optimiert und die Breite der nematischen Phase den praktischen Anforderungen angepaßt werden.

Es bedeuten in der allgemeinen Formel (II):

$R^1$ eine Alkylkette mit 10 bis 16 oder eine Alkoxykette mit 8 bis 14 C-Atomen und $R^2$ eine Alkylkette mit 2 bis 9 C-Atomen. Diese Verbindungen werden in der DE-A 37 31 639 beschrieben. Sie entfalten ihre günstige Wirkung bereits bei Zusatzmengen ab etwa 2 mol% bezogen auf die Mischung aus den Komponenten vom Typ a und b. Bei Zusatzmengen ab etwa 10 und bis etwa 40 mol% ergibt sich eine Verbreiterung der nematischen Phase um etwa 8 bis 18 °C und der smektischen Phase um etwa 6 bis 15 °C. Sehr vorteilhaft ist es daneben, daß der Zusatz die an sich bereits sehr niedrige Rotationsviskosität der erfindungsgemäßen Basis-Mischung nur unwesentlich erhöht.

Eine Absenkung des Schmelzpunkts und der unteren Phasenumwandlungstemperatur der $S_c$-Phase der Mischungen kann, wenn diese noch zu hoch liegen, durch Zusatz mindestens einer Verbindung (Alkenyloxy-phenyl-pyrimidin-Derivat) der allgemeinen Formel (III), d. h. einer Verbindung vom Typ c, zu Mischungen aus Verbindungen vom Typ a alleine oder mit einem zusätzlichen Gehalt an Verbindungen vom Typ b erreicht werden:

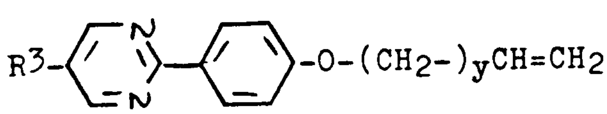 (III)

In der allgemeinen Formel (III) bedeuten $R^3$ einen verzeigten oder geradkettigen Alkylrest mit 7 bis 16 C-Atomen oder einen geradkettigen oder verzweigten Alkoxyrest mit 6 bis 14 C-Atomen und y eine ganze Zahl von 4 bis 14. Diese Verbindungen werden in der DE-A 37 31 638 beschrieben. Zusatzmengen von etwa 10 bis 35 mol%, bezogen auf die Gesamtmischung, bewirken eine Absenkung der unteren Temperaturgrenze der $S_c$-Phase um bis zu 5 °C. Die übrigen günstigen physikalischen Eigenschaften der Mischungen werden durch diesen Zusatz in der Regel nicht beeinträchtigt.

Zur Absenkung des Schmelzpunkts und der unteren Temperaturgrenze der $S_c$-Phase können zusammen mit Verbindungen des Typs c oder an ihrer Stelle auch Verbindungen der Formel (IV), d. h. des Typs d,

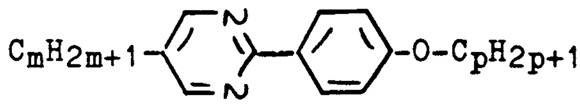

(IV)

zugesetzt werden, wobei m und p unabhängig voneinander ganze Zahlen von 6 bis 14 sind. Bei Zusatzmengen von etwa 10 bis 25 mol% der Verbindung des Typs d bzw. Mischungen mit Verbindungen des Typs c, bezogen auf die Gesamtmischung, zu Mischungen aus Verbindungen des Typs a bzw. a und b ergeben sich Absenkungen der unteren Temperaturgrenze der $S_c$-Phase um bis zu 10 °C.

Die Mischungen aus Verbindungen der Typen a, b und c und/oder d eignen sich besonders gut als Matrix zur Herstellung von ferroelektrischen Flüssigkristall-Mischungen, die man daraus durch Dotieren mit optisch aktiven Verbindungen erhält.

Als besonders geeignet für die Zwecke der Erfindung haben sich folgende Dotierstoffe des Typs e erwiesen:

a) optisch aktive Ester aus $\alpha$-Chlorcarbonsäuren und mesogenen Phenolen gemäß der DE-A 37 03 228 und insbesondere der optisch aktive
Ester gemäß der nachstehenden Formel

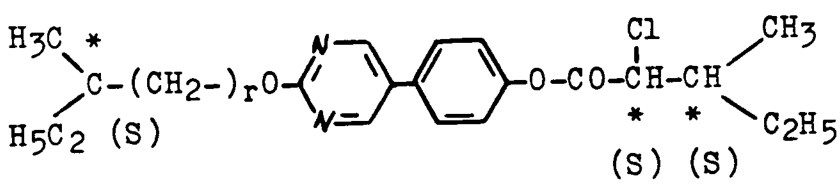

mit r = 4 bis 8

b) optisch aktive Ester des N-Acylprolins gemäß der DE-A 36 44 522

c) optisch aktive Ester von 1,3-Dioxolan-4-carbonsäuren gemäß der DE-A 37 13 273

d) optisch aktive Ester von Oxiran-2-carbonsäuren gemäß der DE-A 37 18 174.

Diese Dotierstoffe induzieren vielfach schon bei geringen Zusatzmengen ab 0,5 und insbesondere ab 3 mol%, bezogen auf die Gesamtmischung, das ferroelektrische Verhalten. Die obere Grenze der Zusatzmenge liegt bei 30 mol%.

Der Zusatz dieser Dotierstoffe beeinflußt in der Regel das Schmelz- und Phasenverhalten der Mischung, wobei vielfach eine nochmalige Absenkung des Schmelzpunkts und der unteren Temperaturgrenze der $S_c^*$ -Phase auftritt. Außerdem kann je nach Art und Menge des Dotierstoffs eine Senkung oder Erhöhung der oberen Temperaturgrenze der $S_c^*$ -Phase und eine Änderung der Breite der N*-Phase eintreten, was bei der Herstellung der Matrixmischung zu berücksichtigen ist. Der optisch aktive Dotierstoff induziert bekanntlich in der $S_c$- und in der N-phase eine helixförmige Verdrillung, wodurch diese Phasen in die $S_c^*$ - bzw. N*-Phasen überführt werden. Die Ganghöhe (pitch) und der Drehsinn dieser Helices in der N*-Phase hängen von Art und Menge des optisch aktiven Dotierstoffs ab. Sie müssen vielfach durch Zusatz eines weiteren Dotierstoffs kompensiert werden, der eine Helix mit entgegengesetztem Drehsinn induziert. Allgemein gilt, daß eine ferroelektrische Flüssigkristallmischung in der N*-Phase eine Helix mit einer Ganghöhe von mehr als 10 $\mu$m und in der $S_c^*$ -Phase von mindestens 5 $\mu$m aufweisen sollte. Die zur Kompensation der Ganghöhe verwendeten Verbindungen sollen in der Mischung vorzugsweise keine oder nur eine vernachlässigbar geringe spontane Polarisation oder eine spontane Polarisation mit dem gleichen Vorzeichen wie der optisch aktive Dotierstoff erzeugen.

Falls eine pitch-Kompensation erforderlich wird, so sind in den erfindungsgemäßen Mischungen die folgenden Kombinationen besonders geeignet:

$a_1$) Optisch aktive $\alpha$-Chlorcarbonsäureester erzeugen eine negative $P_s$ und eine Helix mit negativem Drehsinn. Zur Kompensation setzt man vorteilhaft Derivate des Citronellols der allgemeinen Formel (V) zu

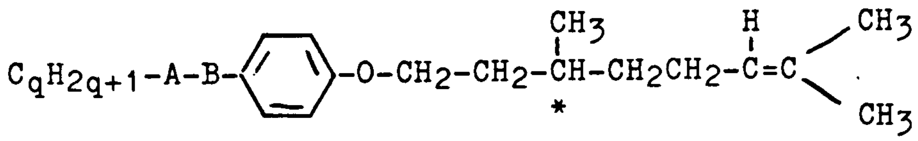 (V)

Darin bedeuten q eine ganze Zahl von 6 bis 16, A ein Sauerstoffatom oder eine chemische Bindung und B einen Pyrimidin-2,5-diyl-Ring, wobei sich der daran gebundene Phenylenring in 2- oder 5-Stellung befinden kann. Zur pitch-Kompensation werden bis zu 4 mol% bezogen auf die Gesamtmischung bzw. 1 mol Citronellolderivat auf 7 bis 13 mol $\alpha$-Chlorcarbonsäureester benötigt.

$b_1$) Optisch aktive N-Acylprolinester mit S-Konfiguration am asymmetrischen C-Atom die in den erfindungsgemäßen Mischungen eine positive $P_s$ und einen negativen pitch erzeugen, lassen sich kompensieren durch Zusatz optisch aktiver Oxiran-2-carbonsäureester gemäß DE-A 37 18 174 mit positiver $P_s$ und insbesondere 2-R-3-R-Konfiguration. Die zuzusetzende Menge beträgt bis zu 6 mol% bezogen auf die Gesamtmischung bzw. 1 mol Oxiran-2-carbonsäureester auf 5 bis 9 mol M-Acylprolinester.

$c_1$) Die Kompensation bei optisch aktiven 1,3-Dioxolan-4-carbonsäureestern mit R-Konfiguration, die ebenfalls eine positive $P_s$ und einen negativen pitch erzeugen, erfolgt zweckmäßig ebenfalls mit Oxiran-2-carbonsäureestern wie unter $b_1$) beschrieben.

Die Verwendung von Oxiran-2-carbonsäureestern, wie bei $b_1$) und $c_1$) beschrieben, hat den zusätzlichen Vorteil, daß diese Verbindungen selbst eine sehr hohe positive $P_s$ erzeugen und damit die $P_s$ der Gesamtmischung erhöhen und die Schaltzeit verkürzen.

Für die gebrauchsfertigen ferroelektrischen FlüssigkristallMischungen wurden die Werte für
die spontane Polarisation $P_s$ [nC/cm$^2$]
die optische Schaltzeit $\tau$ [$\mu$s]
der optische Neigungswinkel ("tilt"-Winkel) $\theta$ [Grad]
die Rotationsviskosität $\gamma$ [mPas]
die Ganghöhe der Helix (pitch) in der N*-Phase [$\mu$m]
die Ganghöhe der Helix (pitch) in der $S_c^*$ Phase [$\mu$m]
die dielektrische Anisotropie $\Delta\epsilon$
und die optische Anisotropie $\Delta n$ ermittelt.

Die $P_s$-Werte werden nach der Methode von H. Diamant et al. (Rev. Sci. Instr., 28, 30, 1957) gemessen, wobei Meßzellen mit 2 $\mu$m Elektrodenabstand und geriebenem Polyimid als Orientierungsschicht verwendet werden.

Zur Bestimmung von $\tau$ und $\theta$ wird die Meßzelle auf dem Drehtisch eines Polarisationsmikroskops zwischen gekreuztem Analysator und Polarisator befestigt. Durch Drehen der Meßzelle von maximalem zu minimalem Lichtdurchgang bei angelegter Spannung wird der optische Neigungswinkel bzw. Schaltwinkel 2 $\theta$ bestimmt. Mit Hilfe einer Photodiode erfolgt die Bestimmung der Schaltzeit $\tau$, indem die Anstiegszeit des Lichtsignals von 10 auf 90% Signalhöhe gemessen wird. Die Schaltspannung besteht aus Rechteckpulsen und beträgt ± 10 V/$\mu$m.

Die Rotationsviskosität wurde bestimmt wie bei C. Escher et al. "First International Symposium on Ferroelectric Liquid Crystals", Bordeaux Arcachon, Sept. 1987, beschrieben. Die Werte beziehen sich auf die Rotation des C-Direktors.

Die Bestimmung des N*-pitches erfolgte in keilförmigen Zellen nach der Methode von Grandjean-Cano [F. Grandjean, CR Acad. Sci, (Paris) 172, 71 (1921); R. Cano, Bull. Soc. Franc. Mineral. Crystallogr. XC, 333 (1967)] und die Bestimmung des $S_c^*$ - pitches durch Auswertung des Beugungsbildes eines Laserstrahls unter Verwendung von Zellen mit 400 $\mu$m Dicke [K. Kondo et al. Jpn. J. Appl. Phys. 21, 224 (1982)]. Zur Bestimmung von $\Delta n$ wurde ein Polarisationsmikroskop mit Berek-Kompensator benutzt.

Auf die in der Beschreibung zitierten DE-A's 37 31 638, 37 31 639, 37 03 228, 36 44 522, 37 13 273 und 37 18 174 wird ausdrücklich Bezug genommen.

**Beispiel 1**

Eine Mischung aus den drei Komponenten

| | |
|---|---|
| 5-Octyloxy-2-(4-octyloxy-phenyl)-pyrimidin LC*)-Bereiche: X 50,7 $S_c$ 92,3 $S_A$ 99,5 N 100,3 I<br>5-Ocytloxy-2(4-hexyloxy-phenyl)-pyridimin LC-Bereiche: X 47 $S_C$ 90 $S_A$ 97 N 98,8 I<br>5-Hexyloxy-2(4-hexyloxy-phenyl)-pyrimidin LC-Bereiche: X 63,6 $S_c$ 71,7 $S_A$ 72,7 N 97,4 I | 57,5 mol%<br>25 mol%<br>17,5 mol% |
| zeigt die folgenden flüssigkristallinen Phasen mit den genannten Temperaturbereichen (LC-Bereiche):<br>X 33 $S_c$ 85 $S_A$ 96,1 N 98,6 I | |

*) = Liquid Crystal ( = flüssigkristalline)

**Beispiel 2**

Eine Mischung aus den 3 Komponenten:

| | |
|---|---|
| 5-Heptyloxy-2(4-pentyloxy-phenyl)-pyrimidin LC-Bereiche: X 53,5 $S_c$ 77,5 $S_A$ 84,2 N 91 I<br>5-Octyloxy-2(4-octyloxy-phenyl)-pyrimidin<br>5-Hexyloxy-2(4-hexyloxy-phenyl)-pyrimidin | 30 mol%<br>42 mol%<br>28 mol% |
| zeigt die LC-Bereiche:<br>X 34,5 $S_c$ 72 $S_A$ 80,5 N 95,5 I | |

**Beispiel 3**

Eine Mischung aus den 3 Komponenten

| | |
|---|---|
| 5-Octyloxy-2(4-octyloxy-phenyl)-pyrimidin<br>5-Octyloxy-2(4-hexyloxy-phenyl)-pyrimidin<br>5-Octyloxy-2(4-heptyloxy-phenyl)-pyrimidin LC-Bereiche: X 53,1 $S_c$ 86,2 $S_A$ 96,7 N 97,9 I | 32 mol%<br>48 mol%<br>20 mol% |
| zeigt die folgenden LC-Bereiche:<br>X 35,5 $S_c$ 88 $S_A$ 97 N 98,5 I | |

**Beispiel 4**

Eine Mischung aus den drei Komponenten

| | |
|---|---|
| 5-Octyloxy-2(4-octyloxy-phenyl)-pyrimidin<br>5-Octyloxy-2(4-hexyloxy-phenyl)-pyrimidin<br>5-Octyloxy-2(4-butyloxy-phenyl)-pyrimidin LC-Bereiche: X 57,6 $S_c$ 82,2 $S_A$ 97,2 N 99,6 I | 26,8 mol%<br>40,2 mol%<br>33 mol% |
| zeigt die folgenden LC-Bereiche:<br>X 21,5 $S_c$ 85 $S_A$ 95 N 97,5 I | |

Dieses Beispiel zeigt gut, daß sich aus nur drei Homologen der erfindungsgemäß verwendeten Klasse der 5-Alkyloxy-2-(4-alkyloxyphenyl)-pyrimidine eine Mischung mit bereits relativ niedrigem Schmelzpunkt und breiter $S_c$-Phase herstellen läßt.

**Beispiel 5**

Eine Mischung aus den vier Komponenten

| | |
|---|---|
| 5-Octyloxy-2(4-octyloxy-phenyl)-pyrimidin<br>5-Octyloxy-2(4-hexyloxy-phenyl)-pyrimidin<br>5-Hexyloxy-2(4-octyloxy-phenyl)-pyrimidin LC-Bereiche: X 60,6 $S_c$ 73,8 $S_A$ 81 N 97,3 I<br>5-Hexyloxy-2(4-hexyloxy-phenyl)-pyrimidin | 32 mol%<br>48 mol%<br>12 mol%<br>8 mol% |
| zeigt die folgenden LC-Bereiche:<br>X 32,5 $S_c$ 85 $S_A$ 95,5 N 99 I | |

**Beispiel 6**

Eine Mischung aus den vier Komponenten

| | |
|---|---|
| 5-Octyloxy-2(4-octyloxy-phenyl)-pyrimidin<br>5-Octyloxy-2(4-hexyloxy-phenyl)-pyrimidin<br>5-Octyloxy-2(4-butyloxy-phenyl)-pyrimidin<br>5-Hexyloxy-2(4-hexyloxy-phenyl)-pyrimidin | 21,44 mol%<br>32,16 mol%<br>26,4 mol%<br>20 mol% |
| zeigt die folgenden LC-Bereiche:<br>X 26 $S_c$ 82 $S_A$ 93,5 N 98 I | |

**Beispiel 7**

Eine Mischung aus den vier Komponenten

| | |
|---|---|
| 5-Octyloxy-2(4-octyloxy-phenyl)-pyrimidin<br>5-Octyloxy-2(4-hexyloxy-phenyl)-pyrimidin<br>5-Octyloxy-2(4-butyloxy-phenyl)-pyrimidin<br>5-Nonyloxy-2(4-heptyloxy-phenyl)-pyrimidin LC-Bereiche: X 56 $S_c$ 94,4 $S_A$ 97,5 I | 24,12 mol%<br>36,18 mol%<br>29,7 mol%<br>10 mol% |
| zeigt die LC-Bereiche:<br>X 22,5 $S_c$ 85,5 $S_A$ 96 N 98 I | |

**Beispiel 8**

Eine Mischung aus den fünf Komponenten

| | |
|---|---|
| 5-Octyloxy-2(4-propyloxy-phenyl)-pyrimidin LC-Bereiche: X 51,7 $S_c$ 72 $S_A$ 87,7 N 88 I<br>5-Heptyloxy-2(4-octyloxy-phenyl)-pyrimidin LC-Bereiche: X 54,7 $S_c$ 82,7 $S_A$ 89,5 N 96,3 I<br>5-Heptyloxy-2(4-pentyloxy-phenyl)-pyrimidin<br>5-Hexyloxy-2(4-octyloxy-phenyl)-pyrimidin<br>5-Hexyloxy-2(4-hexyloxy-phenyl)-pyrimidin | 29,75 mol%<br>15,0 mol%<br>16,58 mol%<br>23,20 mol%<br>15,47 Mol% |
| zeigt die LC-Bereich:<br>X 15 $S_c$ 66,5 $S_A$ 83,5 N 93 I | |

**Beispiel 9**

Eine Mischung aus den fünf Komponenten:

| | |
|---|---|
| 5-Octyloxy-2(4-octyloxy-phenyl)-pyrimidin | 18,76 mol% |
| 5-Octyloxy-2(4-hexyloxy-phenyl)-pyrimidin | 28,14 mol% |
| 5-Octyloxy-2(4-butyloxy-phenyl)-pyrimidin | 23,10 mol% |
| 5-Hexyloxy-2(4-octyloxy-phenyl)-pyrimidin | 15,0 mol% |
| 5-Hexyloxy-2(4-hexyloxy-phenyl)-pyrimidin | 15,0 mol% |
| zeigt die folgenden LC-Bereiche: X 27,7 $S_c$ 80 $S_A$ 92,3 N 97,6 I | |

**Beispiel 10**

Eine Mischung bestehend aus den vier Komponenten

| | |
|---|---|
| 5-Octyloxy-2(4-decyloxy-phenyl)-pyrimidin LC-Bereiche: X 50,2 $S_c$ 88,9 $S_A$ 99,6 I | 25,0 mol% |
| 5-Octyloxy-2(4-octyloxy-phenyl)-pyrimidin | 13,75 mol% |
| 5-Octyloxy-2(4-hexyloxy-phenyl)-pyrimidin | 29,8 mol% |
| 5-Octyloxy-2(4-butyloxy-phenyl)-pyrimidin | 31,45 mol% |
| zeigt die folgenden LC-Bereiche: X 13,1 $S_c$ 81,6 $S_A$ 95,4 N 98,2 I | |

Durch Mischen von nur vier Komponenten ergibt sich ein $S_c$-Bereich von 13,1 °C bis 81,6 °C, d.h. mit einer Phasenbreite von 68,5 °C. Zusätzlich zeigt diese Mischung auch die gewünschte Phasenfolge I → N → $S_A$ → $S_c$ und besitzt einen Klärpunkt von weniger als 100 °C, was für die Anwendung (z.B. Füllen der Displays) von Vorteil ist.

**Beispiel 11**

Eine Mischung aus den vier Komponenten

| | |
|---|---|
| Mischung aus Beispiel 4 | 85 mol% |
| trans-4-Pentyl-cyclohexancarbonsäure-[4-(5-decyl-pyrimidin-2-yl)]phenyl-ester | 15 mol% |
| zeigt die folgenden LC-Bereiche: X 15 $S_c$ 84,5 $S_A$ 91,5 N 105 I | |

In Vergleich zu Beispiel 4 wird durch Zugabe des Cyclohexancarbonsäureesters sowohl die Breite der $S_c$-als auch die der N-Phase stark vergrößert.

**Beispiel 12**

Eine Mischung aus den fünf Komponenten

| | |
|---|---|
| Mischung aus Beispiel 10 | 75 mol% |
| trans-4-Pentyl-cyclohexancarbonsäure-[4-(5-undecyl-pyrimidin-2-yl)]phenyl-ester | 25 mol% |
| zeigt die folgenden LC-Bereiche: X 3,4 $S_c$ 85,6 $S_A$ 91 N 110,2 I | |

**Beispiel 13**

Eine Mischung aus den fünf Komponenten

| | |
|---|---|
| Mischung aus Beispiel 10<br>trans-4-Pentyl-cyclohexancarbonsäure-[4-(5-dodecyl-pyrimidin-2-yl)]phenyl-ester | 80 mol%<br>20 mol% |
| zeigt die folgenden LC-Bereiche:<br>X 8,3 $S_c$ 81,5 $S_A$ 93 N 107 I | |

**Beispiel 14**

Eine Mischung aus den sechs Komponenten

| | |
|---|---|
| 5-Octyloxy-2(4-decyloxy-phenyl)-pyrimidin<br>5-Octyloxy-2(4-octyloxy-phenyl)-pyrimidin<br>5-Octyloxy-2(4-hexyloxy-phenyl)-pyrimidin<br>5-Octyloxy-2(4-butyloxy-phenyl)-pyrimidin<br>trans-4-Pentyl-cyclohexancarbonsäure-4[-(5-decyl-pyrimidin-2-yl)]phenyl-ester<br>trans-4-Pentyl-cyclohexancarbonsäure-[4-(5-octyloxy-pyrimidin-2-yl)]phenyl-ester | 12,8 mol%<br>18,0 mol%<br>27,02 mol%<br>22,18 mol%<br>12 mol%<br>8 mol% |
| zeigt die folgenden LC-Bereiche:<br>X 10,7 $S_c$ 86 $S_A$ 90,1 N 108,5 I. | |

**Beispiel 15a**

Eine Mischung aus den sechs Komponenten

| | |
|---|---|
| Mischung aus Beispiel 10<br>5-Octyloxy-2(4-ethyloxy-phenyl)-pyrimidin LC-Bereiche: X 64,5 $S_c$ 66 $S_A$ 98,5 N 97,4 I<br>trans-4-Pentyl-cyclohexancarbonsäure-[4-(5-octyloxy-pyrimidin-2-yl)]phenyl-ester | 81 mol%<br>10 mol%<br>9 mol% |
| zeigt die folgenden LC-Bereiche:<br>X 12,2 $S_c$ 79,5 $S_A$ 91 N 102,6 I | |

**Beispiel 15b**

Die Zugabe von 30 mol% 5-Octyl-2(4-decyloxy-phenyl)-pyrimidin zu 70 mol% der Mischung aus Beispiel 15a ergibt eine Erniedrigung des Schmelzpunkts und der $S_A/S_c$-Übergangstemperatur um jeweils 6 °C, verschiebt also den breiten $S_c$-Phasenbereich günstig zu niedrigeren Temperaturen hin, ohne ihn wesentlich einzuschränken.

**Beispiel 16**

Eine Mischung aus den folgenden sieben Komponenten

| | |
|---|---|
| 5-Octyloxy-2(4-decyloxy-phenyl)-pyrimidin | 12,7 mol% |
| 5-Octyloxy-2(4-octyloxy-phenyl)-pyrimidin | 6,98 mol% |
| 5-Octyloxy-2(4-hexyloxy-phenyl)-pyrimidin | 15,14 mol% |
| 5-Octyloxy-2(4-butyloxy-phenyl)-pyrimidin | 15,98 mol% |
| 5-Octyloxy-2(4-ethyloxy-phenyl)-pyrimidin | 11,69 mol% |
| trans-4-Pentyl-cyclohexancarbonsäure-[4-(5-octyloxy-pyrimidin-2-yl)]phenyl-ester | 10,69 mol% |
| 2-[4-(10-Undecen-1-yl)oxyphenyl]-5-octyl-pyrimidin | 26,88 mol% |
| zeigt die folgenden LC-Bereiche: X 2,5 $S_c$ 69,4 $S_A$ 81,6 N 95 I | |

**Beispiel 17**

Eine Mischung aus den folgenden sechs Komponenten

| | |
|---|---|
| 5-Octyloxy-2(4-dodecyloxy-phenyl)-pyrimidin LC-Bereiche: X 54 $S_c$ 86,5 $S_A$ 97,6 I | 12,49 mol% |
| 5-Octyloxy-2(4-decyloxy-phenyl)-pyrimidin | 12,48 mol% |
| 5-Octyloxy-2(4-octyloxy-phenyl)-pyrimidin | 6,88 mol% |
| 5-Octyloxy-2(4-hexyloxy-phenyl)-pyrimidin | 20,51 mol% |
| 5-Octyloxy-2(4-butyloxy-phenyl)-pyrimidin | 22,64 mol% |
| trans-4-Pentyl-cyclohexancarbonsäure-[4-(5-decyl-pyrimidin-2-yl)]phenyl-ester | 25,0 mol% |
| zeigt die folgenden LC-Bereiche: X 7,0 $S_c$ 85,6 $S_A$ 89,7 N 110,1 I | |

**Beispiel 18**

Eine Mischung aus den folgenden sieben Komponenten

| | |
|---|---|
| Mischung aus Beispiel 17 | 85 mol% |
| 5-Octyloxy-2(4-dodecyloxy-phenyl)-pyrimidin | 15 mol% |
| zeigt die folgenden LC-Bereiche: X -2,5 $S_c$ 80,6 $S_A$ 87,2 N 102,5 I | |

**Beispiel 19**

Eine ferroelektrische Flüssigkristallmischung aus den folgenden Komponenten

| | |
|---|---|
| 5-Octyloxy-2(4-dodecyloxy-phenyl)-pyrimidin | 10,9 mol% |
| 5-Octyloxy-2(4-decyloxy-phenyl)-pyrimidin | 10,9 mol% |
| 5-Octyloxy-2(4-octyloxy-phenyl)-pyrimidin | 6,0 mol% |
| 5-Octyloxy-2(4-hexyloxy-phenyl)-pyrimidin | 13,0 mol% |
| 5-Octyloxy-2(4-butyloxy-phenyl)-pyrimidin | 16,57 mol% |
| 5-Octyloxy-2(4-ethyloxy-phenyl)-pyrimidin | 10,13 mol% |
| trans-4-Pentyl-cyclohexancarbonsäure-[4-(5-decyl-pyrimidin-2-yl)]phenylester | 22,50 mol% |
| 4-[2-((S)-7-Methyl-nonyloxy)pyrimidin-5-yl]-phenyl-(2S,3S)-2-chlor-3--methyl-pentansäureester | 10,0 mol% |
| zeigt die LC-Bereiche: X -5,5 $S_c^*$ 78 $S_A^*$ 82,5 N* 99,5 I | |

Bei 25 °C betragen die spontane Polarisation $P_s$ = -19 nC/cm$^2$, $\tau$ = 30 $\mu$s, $\theta$ = 30,5 °, $\Delta\epsilon$ (20 kHz) = -0.8 und $\gamma$ = 110 mPas.

**Beispiel 20**

Eine ferroelektrische Flüssigkristallmischung aus den folgenden Komponenten:

| | |
|---|---|
| 5-Octyloxy-2(4-decyloxy-phenyl)-pyrimidin | 11,95 mol% |
| 5-Octyloxy-2(4-octyloxy-phenyl)-pyrimidin | 6,58 mol% |
| 5-Octyloxy-2(4-hexyloxy-phenyl)-pyrimidin | 14,25 mol% |
| 5-Octyloxy-2(4-butyloxy-phenyl)-pyrimidin | 15,03 mol% |
| 5-Octyloxy-2(4-ethyloxy-phenyl)-pyrimidin | 5,92 mol% |
| trans-4-Pentyl-cyclohexancarbonsäure-[4-(5-octyloxy-pyrimidin-2-yl)]-phenyl-ester | 10,07 mol% |
| 4-[2-((S)-7-Methyl-nonyloxy)pyrimidin-5-yl]-phenyl-(2S,3S)-2-chlor-3--methyl-pentansäureester | 9,9 mol% |
| 5-[ 4-((S)-3,7-Dimethyl-oct-6-en-1-yl)oxyphenyl]-2-octyloxy-pyrimidin 1 mol% | |
| 2-[4-(10-Undecen-1-yl)oxyphenyl]-5-octyl-pyrimidin | 25,3 mol% |
| zeigt die LC-Bereiche: X -1 $S_c^*$ 71 $S_A^*$ 79 N* 90 I | |

Bei 25 °C betragen die Werte für die spontane Polarisation $P_s$ = -20nC/cm$^2$, $\tau$ = 30 $\mu$s, $\theta$ = 29,5 °, $\gamma$ = 54 mPas, $\Delta n$ = 0,12, $\Delta\epsilon$ (20 kHz) = -0,8 und pitch N* für 79 °C = -36 $\mu$m und für 82 °C = +74,3 $\mu$m, d.h. es tritt in der N*-Phase eine Helixinversion auf, was auf eine optimale pitch-Kompensation hinweist.

**Beispiel 21**

Eine ferroelektrische Flüssigkristallmischung aus den folgenden Komponenten:

| | |
|---|---|
| LC-Matrix-Mischung aus Beispiel 18 | 78,8 mol% |
| 4-[2-((S)-7-Methyl-nonyloxy)pyrimidin-5-yl]-phenyl-(2S,3S)-2-chlor-3-methyl-pentansäureester | 19,7 mol% |
| 5-[(4-((S)-3,7-Dimethyl-oct-6-en-1-yl)oxyphenyl]-2-octyloxy-pyrimidin | 1,5 mol% |
| zeigt die folgenden LC-Bereiche: X -7,2 $S_c^*$ 71,6 $S_A^*$ 76,4 N* 86,1 I | |

Bei 25 °C betragen die Werte für $P_s$ = -41 nC/cm$^2$, $\tau$ = 18 µs, $\theta$ = 32 °, $\gamma$- 160 mPas, $\Delta n$ = 0,12, $\Delta\epsilon$ (20 kHz) = -0.9, pitch $S_c^*$ = 9 µm und pitch N* (78,5 °C) = -31,8 µm.

**Beispiel 22**

Eine ferroelektrische Flüssigkristallmischung aus den folgenden Komponenten

| | |
|---|---|
| LC-Matrix-Mischung aus Beispiel 18<br>4-[2-((S)-7-Methyl-nonyloxy)pyrimidin-5-yl]-phenyl-(2S,3S)-2-chlor-3-methyl-pentansäureester | 95 mol%<br>5 mol% |
| zeigt die folgenden LC-Bereiche:<br>X -6,5 $S_c^*$ 77,4 $S_A^*$ 82,5 N* 91,5 I | |

Bei 25 °C betragen die Werte für $P_s$ = -8 nC/cm$^2$, $\tau$ = 100 µs, $\theta$ = 30 °, $\gamma$ = 56 mPas, $\Delta n$ = 0,12, $\Delta\epsilon$ - (20kHz) = -0,8, pitch $S_c^*$ größer 15 µm and pitch N* (86 °C) = -26 µm.

Mit dem hier verwendeten optisch aktiven Dotierstoff in einer Konzentration von 5 mol% ist eine pitch-Komposition, wie die Ergebnisse zeigen, nicht notwendig.

**Beispiel 23**

Eine ferroelektrische Flüssigkristallmischung aus den folgenden Komponenten

| | |
|---|---|
| LC-Matrix-Mischung aus Beispiel 18<br>(R)-[4-(5-n-Octyl-pyrimidin-2-yl)-phenyl]-2,2-dimethyl-1,3-dioxolan-4-carbonsäureester | 95 mol%<br>5 mol% |
| zeigt die folgenden LC-Bereiche:<br>X -4,5 $S_c$ 78 $S_A$ 83,7 N* 98,5 I | |

Bei 25 °C ergeben sich die folgenden Werte für $P_s$ = +8 nC/cm$^2$, $\tau$ = 70 µs, $\theta$ = 29 °, $\Delta n$ = 0,12, $\Delta\epsilon$ - (20 kHz) kleiner Null und pitch N* (84 °) = -14µm. Bei dieser Mischung kann ebenfalls auf eine pitch-Kompensation verzichtet werden.

**Beispiel 24**

Eine Mischung aus den fünf Komponenten

| | |
|---|---|
| Mischung aus Beispiel 10<br>trans-4-Pentyl-cyclohexancarbonsäure-[4-(5-dodecyl-pyrimidin-2-yl)]phenylester | 70 mol-%<br>30 mol-% |
| zeigt die Phasensequenz:<br>X 9 $S_c$ 86 $S_A$ 92 N 112 I. | |

**Beispiel 25**

Eine Mischung aus den fünf Komponenten

| | |
|---|---|
| Mischung aus Beispiel 10<br>5-Octyl-2(4-decyloxyphenyl)-pyrimidin | 85 mol-%<br>15 mol-% |
| zeigt die Phasenfolge<br>X 9 $S_c$ 76 $S_A$ 89 N 93 I. | |

**Besipiel 26**

Eine Mischung aus den sechs Komponenten

| | |
|---|---|
| Mischung aus Beispiel 10<br>trans-4-Pentyl-cyclohexancarbonsäure-[4(5-undecyl-pyrimidin-2-yl)]phenylester<br>trans-4-Pentyl-cyclohexancarbonsäure-[4(5-octyloxy-pyrimidin-2-yl)]phenylester | 80 mol-%<br>13 mol-%<br>7 mol-% |
| zeigt die Phasensequenz<br>X 8 $S_c$ 85 $S_A$ 91 N 109 I und damit einen $S_c$-Bereich von 77 °C. | |

**Beispiel 27**

Eine Mischung aus den sechs Komponenten

| | |
|---|---|
| Mischung aus Beispiel 10<br>5-Octyl-2(4-decyloxyphenyl)-pyrimidin<br>trans-4-Pentyl-cyclohexancarbonsäure-[4(5-decyl-pyrimidin-2-yl)]phenylester | 49 mol-%<br>30 mol-%<br>21 mol-% |
| hat die Phasenfolge:<br>X 8 $S_c$ 80 $S_A$ 83 N 102 I und ist unterkühlbar bis -10 °C. | |

**Beispiel 28**

Eine Mischung aus den sieben Komponenten

| | |
|---|---|
| 5-Octyloxy-2(4-hexyloxy-phenyl)-pyrimidin<br>5-Octyloxy-2(4-octyloxy-phenyl)-pyrimidin<br>5-Octyloxy-2(4-butyloxy-phenyl)-pyrimidin<br>5-Octyloxy-2(4-decyloxy-phenyl)-pyrimidin<br>5-Octyloxy-2(4-dodecyloxy-phenyl)-pyrimidin<br>trans-4-Pentyl-cyclohexancarbonsäure[4(5-decyl-pyrimidin-2-yl)]phenylester<br>5-Octyl-2(4-dodecyloxy-phenyl)-pyrimidin | 17 mol-%<br>6 mol-%<br>19 mol-%<br>11 mol-%<br>11 mol-%<br>21 mol-%<br>15 mol-% |
| hat die Phasenfolge<br>X-1 $S_c$ 81 $S_A$ 87 N 102 I | |

**Beispiel 29**

Eine Mischung aus den neun Komponenten:

| | |
|---|---|
| Mischung aus Beispiel 15a<br>5-Octyl-2(4-dodecyloxyphenyl)-pyrimidin | 72,5 mol-%<br>27,5 mol-% |
| hat die Phasenfolge<br>X $\phi$ $S_c$ 70 $S_A$ 85 N 93 I. | |

**Besipiel 30**

Eine Mischung aus den sieben Komponenten:

| | |
|---|---|
| Mischung aus Beispiel 10 | 48 mol-% |
| 5-Octyloxy-2(4-dodecyloxyphenyl)-pyrimidin | 11 mol-% |
| 5-Octyloxy-2(4-ethoxyphenyl)-pyrimidin | 11 mol-% |
| trans-4-Pentyl-cyclohexancarbonsäure-[4(5-decyl-pyrimidin-2-yl)]phenylester | 30 mol-% |
| hat die Phasenfolge<br>X -3 $S_c$ 81 $S_A$ 82 N 112 I. | |

**Beispiel 31**

Eine binäre Mischung aus

| | |
|---|---|
| 5-Octyloxy-2(4-butyloxyphenyl)-pyrimidin | 50 mol-% |
| X 58 $S_c$ 87 $S_A$ 97 N 99 I | |

und

| | |
|---|---|
| 5-Octyloxy-2(4-decyloxyphenyl)-pyrimidin | 50 mol-% |
| X 52 $S_c$ 89 $S_A$ 99 I<br>hat die Phasenfolge<br>X 19 $S_c$ 75 $S_A$ 93 N 94 I | |

und somit bereits einen 56 °C breiten $S_c$-Bereich.

**Beispiel 32**

Eine binäre Mischung aus

| | |
|---|---|
| 5-Decyloxy-2(4-decyloxyphenyl)-pyrimidin | 40 mol-% |
| X 53 $S_c$ 103 I | |

und

| | |
|---|---|
| 5-Decyloxy-2(4-octyloxyphenyl)-pyrimdin | 60 mol-% |
| X 58 $S_c$ 101 $S_A$ 102 I<br>besitzt die Phasenfolge<br>X 43 $S_c$ 101 $S_A$ 102 I. | |

Dieses Beispiel zeigt, daß zwar der Schmelzpunkt nicht aber der Übergang $S_c$-$S_A$ abgesenkt wird.

**Beispiel 33**

Eine Mischung aus der drei Komponenten

| | |
|---|---|
| Mischung aus Beispiel 32<br>5-Decyloxy-2(4-hexyloxyphenyl)-pyrimidin | 50 mol-%<br>50 mol-% |
| X 52 $S_c$ 100 $S_A$ 102 I,<br>hat die Phasenfolge<br>X 32 $S_c$ 100 $S_A$ 102 I. | |

Dieses Beispiel zeigt wiederum die starke Absenkung des Schmelzpunktes ohne Absenkung der $S_c$-$S_A$ Übergangstemperatur. Dadurch erhält man bereits mit drei Komponenten einen $S_c$-Bereich von 68°C, ähnlich wie beim Beispiel 10, bei dem die Abmischung nach dem selben Prinzip erfolgt.

**Beispiel 34**

Eine Mischung aus den acht Komponenten:

| | |
|---|---|
| Mischung aus Beispiel 10<br>5-Octyl-2(4-decyloxyphenyl)-pyrimidin<br>5-Octyl-2(4-hexyloxyphenyl)-pyrimidin<br>5-Octyl-2(4-octyloxyphenyl)-pyrimdin | 45 mol-%<br>14 mol-%<br>22 mol-%<br>19 mol-% |
| hat die Phasenfolge<br>X 5 $S_c$ 63 $S_A$ 77 N 82 I. | |

**Beispiel 35**

Ausgehend von der Mischung dieses Beispiels wird gezeigt, daß es möglich ist, auf dieser Basis eine breite $S_c$-Phase ohne $S_A$-Phase zu erhalten. Die Phasenfolge X→$S_c$→N→I wird für einige spezielle Anwendungen ferroelektrischer Flüssigkristalle favorisiert (siehe z.B. C.Bowry et al., Eurodisplay 87, Tagungsband, Seite 33 (1987)].

Eine Mischung aus den acht Komponenten:

| | |
|---|---|
| Mischung aus Beispiel 34<br>trans-4-Pentyl-cyclohexancarbonsäure-4(5-decylpyrimidin-2-yl)]phenylester | 65 mol-%<br>35 mol-% |
| besitzt die Phasenfolge:<br>X -2 $S_c$ 71 N 108 I. | |

**Beispiel 36**

Eine Mischung aus den fünf Komponenten:

| | |
|---|---|
| Mischung aus Beispiel 10<br>trans-4-Pentyl-cyclohexancarbonsäure-[4(5-decyl-pyrimdin-2-yl)]phenylester | 70 mol-%<br>30 mol-% |
| besitzt die Phasenfolge<br>X 7 $S_c$ 86 N 113 I. | |

**Beispiel 37**

Eine ferroelektrische Flüssigkristallmischung bestehend aus den sechs Komponenten:

| | |
|---|---|
| Mischung aus Beispiel 36<br>4-[2-((S)-7-Methyl-nonyloxy)pyrimdin-5-yl]-phenyl-(2S,3S)-2-chlor-3-methyl-pentansäureester | 90 mol-%<br>10 mol-% |
| besitzt die Phasenfolge<br>X -4 $S_c^*$ 83 N* 104 I. | |

Die spontane Polarisation beträgt 18 nC/cm$^2$ (20 °C).

**Beispiel 38**

Eine ferroelektrische Mischung bestehend aus den neun Komponenten:

| | |
|---|---|
| 5-Octyloxy-2(4-hexyloxy-phenyl)-pyrimidin | 16 mol-% |
| 5-Octyloxy-2(4-octyloxy-phenyl)-pyrimidin | 5 mol-% |
| 5-Octyloxy-2(4-butyloxy-phenyl)-pyrimidin | 18 mol-% |
| 5-Octyloxy-2(4-decyloxy-phenyl)-pyrimidin | 10 mol-% |
| 5-Octyloxy-2(4-dodecyloxy-phenyl)-pyrimidin | 10 mol-% |
| trans-4-Pentyl-cyclohexancarbonsäure-[4(5-decyl-pyrimidin-2-yl)]-phenylester | 23 mol-% |
| 5-Octyl-2(4-dodecyloxy-phenyl)-pyrimidin | 14 mol-% |
| (2R,3R)-3-Propyl-oxiran-2-carbonsäure-[4(2-octyloxy-pyrimidin-5-yl)phenyl]-ester | 1,24 mol-% |
| (R)-4-(5-n-Octyl-pyrimidin-2-yl)-phenyl-2,2-dimethyl-1,3-dioxolan-4-carbonsäureester | 2,76 mol-% |

besitzt einen $S_c^*$ -Bereich von -5 bis 79 °C und bei 25 °C eine spontane Polarisation von 8,7 nC/cm$^2$. Die oberhalb der $S_A$-Phase liegende cholesterische Phase ist pitch-kompensiert.

**Beispiel 39**

Eine ferroelektrische Mischung bestehend aus den neun Komponenten:

| | |
|---|---|
| 5-Octyloxy-2(4-hexyloxy-phenyl)-pyrimidin | 14 mol-% |
| 5-Octyloxy-2(4-octyloxy-phenyl)-pyrimidin | 5 mol-% |
| 5-Octyloxy-2(4-butyloxy-phenyl)-pyrimidin | 16 mol-% |
| 5-Octyloxy-2(4-decyloxy-phenyl)-pyrimidin | 9 mol-% |
| 5-Octyloxy-2(4-dodecyloxy-phenyl)-pyrimidin | 9 mol-% |
| trans-4-Pentyl-cyclohexancarbonsäure-[4(5-decyl-pyrimidin-2-yl)]-phenylester | 21 mol-% |
| 5-Octyl-2(4-dodecyloxy-phenyl)-pyrimidin | 13 mol-% |
| (2R,3R)-3-Propyl-oxiran-2-carbonsäure-[4(2-octyloxy-pyrimidin-5-yl)-phenyl]-ester | 4 mol-% |
| (R)-4-(5-n-Octyl-pyrimidin-2-yl)-phenyl-2,2-dimethyl-1,3-dioxolan-4-carbonsäureester | 9 mol-% |

besitzt einen $S_c^*$ -Bereich von 3 bis 75 °C und eine spontane Polarisation von 38 nC/cm$^2$, sowie eine elektro-optische Schaltzeit von 20 µs bei 10 V/µm Rechteckspannung und 25 °C.

**Beispiel 40**

Eine Mischung aus den fünf Komponenten:

| | |
|---|---|
| Mischung aus Beispiel 10<br>trans-4-Pentyl-cyclohexancarbonsäure-[4(5-decyl-pyrimidin-2-yl)]-phenylester | 85 mol-%<br>15 mol-% |
| besitzt die Phasenfolge<br>X 9 $S_c$ 84 $S_A$ 93 N 105 I. | |

**Beispiel 41**

Eine ferroelektrische Mischung aus den sieben Komponenten

| | |
|---|---|
| Mischung aus Beispiel 40<br>(R)-4-(5-n-Octyloxy-pyrimidin-2-yl)-phenyl-2,2-dimethyl-1,3-dioxolan-4--carbonsäureester<br>(2R,3R)-3-Propyl-oxiran-2-carbonsäure-[4(2-[(S)-7-Methyl]nonyloxy-pyrimidin-5-yl)phenyl]-ester | 90 mol-%<br>7,4 mol-%<br><br>2,6 mol-% |

besitzt eine $S_c^*$ -Phase von -1 °C bis 79 °C. Bei 25 °C beträgt die spontane Polarisation 28 nC/cm$^2$ und die Schaltzeit 16 µs bei 10 V/µm.

**Beispiel 42**

Eine ferroelektrische Mischung aus den sieben Komponenten

| | |
|---|---|
| Mischung aus Beispiel 40<br>(R)-4-(5-n-Octyloxy-pyrimidin-2-yl)-phenyl-2,2-dimethyl-1,3-dioxolan-4-carbonsäureester<br>(2R,3R)-3-Propyl-oxiran-2-carbonsäure-[4(2-octyloxy-pyrimidin-5-yl)phenyl]-ester | 90 mol-%<br>8,1 mol-%<br>1,9 mol-% |

besitzt eine $S_c^*$ -Phase von -1 °C bis 78 °C. Bei 25 °C beträgt die spontane Polarisation 24 nC/cm$^2$ und die Schaltzeit 29 µs bei 10 V/µm.

**Beispiel 43**

Eine ferroelektrische Mischung aus den sieben Komponenten

| | |
|---|---|
| Mischung aus Beispiel 40<br>(R)-4-(5-n-Octyloxy-pyrimidin-2-yl)-phenyl-2,2-pentamethylen-1,3-dioxolan-4-carbonsäureester<br>(2R,3R)-3-Propyl-oxiran-2-carbonsäure-[4(2-[(S)-7-Methyl]nonyloxy-pyrimidin-5-yl)phenyl]-ester | 90 mol-%<br>7,4 mol-%<br><br>2,6 mol-% |

besitzt eine $S_c^*$ -Phase von -1 °C bis 79 °C. Bei 25 °C beträgt die spontane Polarisation 29 nC/cm$^2$ und die Schaltzeit 38 µs bei 10 V/µm.

**Beispiel 44**

Eine ferroelektrische Mischung aus den sieben Komponenten

| | |
|---|---|
| Mischung aus Beispiel 40 | 98 mol-% |
| (R)-4-(5-n-Octyloxy-pyrimidin-2-yl)-phenyl-2,2-dimethyl-1,3-dioxolan-4-carbonsäureester | 1,6 mol-% |
| (2R,3R)-3-Propyl-oxiran-2-carbonsäure-[4(2-octyloxy-pyrimidin-5-yl)phenyl]-ester | 0,4 mol-% |

besitzt eine $S_c^*$ -Phase von 7 °C bis 82 °C. Bei 25 °C beträgt die spontane Polarisation 3 nC/cm$^2$.

Die Mischungen in den Beispielen 41 bis 44 sind in der cholesterischen Phase pitch-kompensiert, d.h. die beiden optisch-aktiven Dotierstoffe besitzen einen umgekehrten Helixdrehsinn, so daß bei einer bestimmten Temperatur die cholesterische Helixganghöhe unendlich wird. Im restlichen cholesterischen Temperaturbereich ist die Helixganghöhe >10 µm, so daß eine gute Planare Orientierung erhalten wird.

**Patentansprüche**

1. Flüssigkristalline Mischung, enthaltend mindestens zwei 5-Alkoxy-2(4-alkyloxy-phenyl)-pyrimidine der allgemeinen Formel (I) als Mischungskomponenten

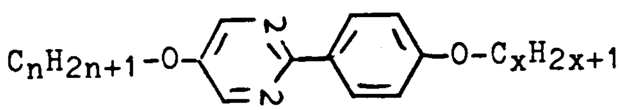

(I),

in der die Alkylreste geradkettige Alkylreste sind, in denen n eine ganze Zahl von 6 bis 14 und x eine ganze Zahl von 2 bis 14 bedeuten.

2. Flüssigkristalline Mischung nach Anspruch 1, dadurch gekennzeichnet, daß n bei den Mischungskomponenten der allgemeinen Formel (I) konstant ist, und daß sich x jeweils um mindestens $\Delta x = 2$ unterscheidet.

3. Flüssigkristalline Mischung nach Anspruch 1 oder 2, dadurch gekennzeichnet, daß sie mindestens 3 Mischungskomponenten der allgemeinen Formel (I) enthält, in der n eine ganze Zahl von 7 bis 14 bedeutet.

4. Flüssigkristalline Mischung nach einem der Ansprüche 1 bis 3, dadurch gekennzeichnet, daß sie 20 bis 90 mol%, bezogen auf die Mischung aller Mischungskomponenten, der Mischungskomponenten der allgemeinen Formel (I) enthält.

5. Flüssigkristalline Mischung nach einem der Ansprüche 1 bis 4, gekennzeichnet durch einen Gehalt an mindestens einem Cyclohexancarbonsäureester der allgemeinen Formel (II)

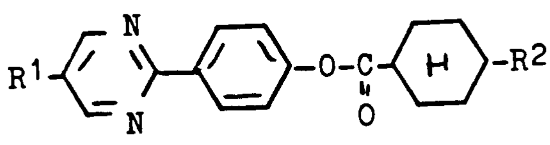

(II)

in der $R^1$ einen Alkylrest mit 10 bis 16 C-Atomen oder einen Alkyloxyrest mit 8 bis 14 C-Atomen und $R^2$ einen Alkylrest mit 2 bis 9 C-Atomen bedeuten.

6. Flüssigkristalline Mischung nach Anspruch 5, dadurch gekennzeichnet, daß sie 2 bis 40 mol%, bezogen auf die Mischung aller Mischungskomponenten, der Mischungskomponente der allgemeinen Formel (II) enthält.

7. Flüssigkristalline Mischung nach einem der Ansprüche 1 bis 6, gekennzeichnet durch einen Gehalt an mindestens einem Alkenyloxy-phenyl-pyrimidin-Derivat der allgemeinen Formel (III)

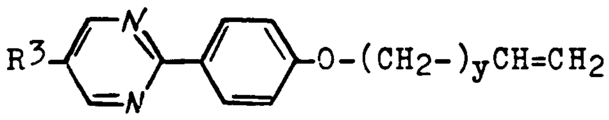

(III)

in der $R^3$ eine Alkylkette mit 7 bis 16 C-Atomen oder eine Alkyloxykette mit 6 bis 14 C-Atomen und y eine ganze Zahl von 4 bis 14 bedeuten.

8. Flüssigkristalline Mischung nach Anspruch 7, dadurch gekennzeichnet, daß sie 10 bis 35 mol%, bezogen auf die Mischung aller Mischungskomponenten, der Mischungskomponente der allgemeinen Formel (III) enthält.

9. Flüssigkristalline Mischung nach einem der Ansprüche von 1 bis 8, gekennzeichnet durch einen Gehalt an mindestens einem Alkyl-pyrimidin-alkoxy-phenyl-Derivat der allgemeinen Formel (IV)

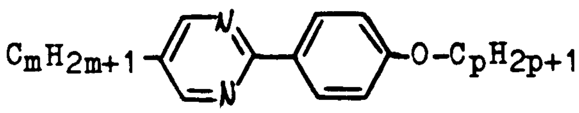

(IV)

in der m und p unabhängig voneinander ganze Zahlen von 6 bis 14 sind.

10. Flüssigkristalline Mischung nach Anspruch 9, dadurch gekennzeichnet, daß sie 10 bis 25 mol% der Mischungskomponente(n) der allgemeinen Formel (IV) bzw. der allgemeinen Formeln (III) und (IV), bezogen auf die Mischung aller Mischungskomponenten, enthält.

11. Ferroelektrische Flüssigkristallmischung aus einer flüssigkristallinen Mischung nach einem der Ansprüche 1 bis 10 als Matrix und mindestens einem optisch aktiven Dotierstoff.

12. Ferroelektrische Flüssigkristallmischung nach Anspruch 11, gekennzeichnet durch einen Gehalt an mindestens einer optisch aktiven Verbindung aus der Gruppe
a) optische aktive Ester aus $\alpha$-Chlorcarbonsäuren und mesogenen Phenolen
b) optisch aktive Ester des N-Acylprolins
c) optisch aktive Ester von 1,3-Dioxolan-4-carbonsäuren
d) optisch aktive Ester von Oxiran-2-carbonsäuren
als Dotierstoff.

13. Ferroelektrische Flüssigkristallmischung nach Anspruch 12, dadurch gekennzeichnet, daß sie 0,5 bis 30 mol%, bezogen auf die Mischung aller Mischungskomponenten, an Dotierstoff enthält.

14. Ferroelektrische Flüssigkristallmischung nach Anspruch 12 oder 13, gekennzeichnet durch einen Gehalt an einem optisch aktiven Ester der Formel

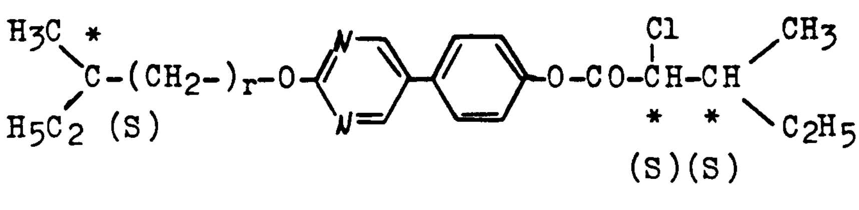

mit r = 4 bis 8.

**15.** Ferroelektrische Flüssigkristallmischung nach einem der Ansprüche 11 bis 14, gekennzeichnet durch einen Gehalt an einem zusätzlichen optisch aktiven Dotierstoff, der die Ganghöhe der induzierten Helix kompensiert.

**16.** Ferroelektrische Flüssigkristallmischung nach Anspruch 15, dadurch gekennzeichnet, daß sie einen optisch aktiven Ester aus einer α-Chlorcarbonsäure und einem mesogenen Phenol und ein Derivat des Citronellols der allgemeinen Formel (V)

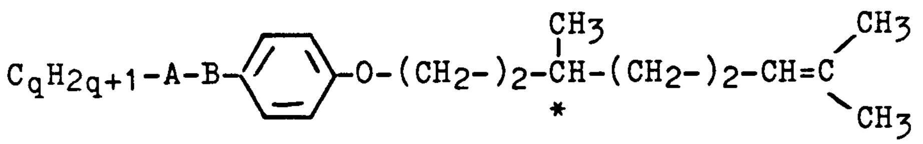

(V)

enthält, in der q eine ganze Zahl von 6 bis 16, A ein Sauerstoffatom oder eine chemische Bindung und B einen Pyrimidin-2,5-diylring bedeuten, wobei sich der an den Pyrimidindiylring gebundene Phenylenring in 2- oder 5-Stellung befinden kann.

**17.** Elektro-optisches Bauteil, enthaltend eine flüssigkristalline Mischung nach einem der Ansprüche 1 bis 16.

**Claims**

**1.** A liquid-crystalline mixture, containing at least two 5-alkoxy-2-(4-alkoxyphenyl)pyrimidines of the formula (I) as mixture components

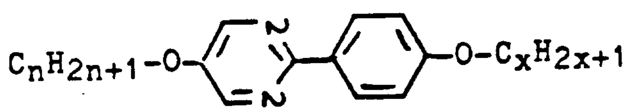

**(I)**

in which the alkyl radicals are straight-chain alkyl radicals in which n denotes an integer from 6 to 14 and x denotes an integer from 2 to 14.

**2.** A livid-crystalline mixture as claimed in claim 1, wherein n is constant in the mixture components of the formula (I), and wherein x in each case differs by at least $\Delta x = 2$.

**3.** A liquid-crystalline mixture as claimed in claim 1 or 2, which contains at least 3 mixture components of the formula (I) in which n denotes an integer from 7 to 14.

**4.** A liquid-crystalline mixture as claimed in any one of claims 1 to 3, which contains 20 to 90 mol%, relative to the mixture of all the mixture components, of mixture components of the formula (I).

**5.** A liquid-crystalline mixture as claimed in any one of claims 1 to 4, containing at least one cyclohexanecarboxylate of the formula (II)

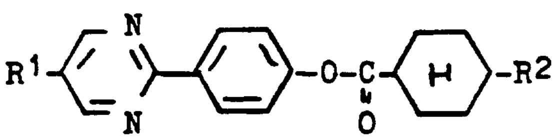

**(II)**

in which $R^1$ denotes an alkyl radical having 10 to 16 carbon atoms or an alkoxy radical having 8 to 14 carbon atoms, and $R^2$ denotes an alkyl radical having 2 to 9 carbon atoms.

6. A liquid-crystalline mixture as claimed in claim 5, which contains 2 to 40 mol%, relative to the mixture of all the mixture components, of mixture components of the formula (II).

7. A liquid-crystalline mixture as claimed in any one of claims 1 to 6, containing at least one alkenyloxyphenylpyrimidine derivative of the formula (III)

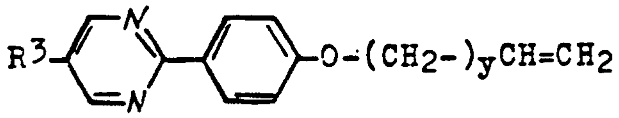

(III)

in which $R^3$ denotes an alkyl chain having 7 to 16 carbon atoms or an alkoxy chain having 6 to 14 carbon atoms, and y denotes an integer from 4 to 14.

8. A liquid-crystalline mixture as claimed in claim 7, which contains 10 to 35 mol%, relative to the mixture of all the mixture components, of mixture components of the formula (III).

9. A liquid-crystalline mixture as claimed in any one of claims 1 to 8, containing at least one alkoxyphenyl derivative of an alkylpyrimidine of the formula (IV)

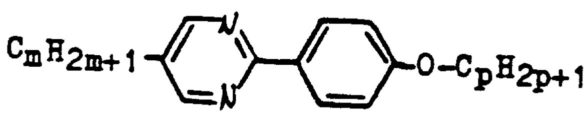

(IV)

in which m and p, independently of one another, are integers from 6 to 14.

10. A liquid-crystalline mixture as claimed in claim 9, which contains 10 to 25 mol% of the mixture component(s) of the formula (IV) or of the formulae (III) and (IV), relative to the mixture of all the mixture components.

11. A ferroelectric liquid-crystal mixture comprising a liquid-crystalline mixture as claimed in any one of claims 1 to 10 as the matrix and at least one optically active dope.

12. A ferroelectric liquid-crystal mixture as claimed in claim 11, containing at least one optically active compound from the group comprising
a) optically active esters made from α-chlorocarboxylic acids and mesogenic phenols
b) optically active esters of N-acylproline
c) optically active esters of 1,3-dioxolane-4-carboxylic acids
d) optically active esters of oxirane-2-carboxylic acids
as the dope.

13. A ferroelectric liquid-crystal mixture as claimed in claim 12, which contains 0.5 to 30 mol% of the dope, relative to the mixture of all the mixture components.

14. A ferroelectric liquid-crystal mixture as claimed in claim 12 or 13, containing an optically active ester of the formula

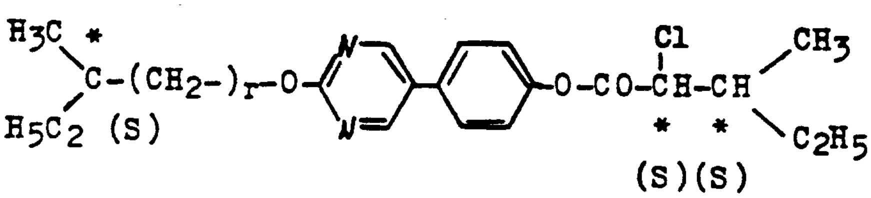

where r = 4 to 8.

**15.** A ferroelectric liquid-crystal mixture as claimed in any one of claims 11 to 14, containing an additional optically active dope which compensates for the pitch of the induced helix.

**16.** A ferroelectric liquid-crystal mixture as claimed in claim 15, which contains an optically active ester made from an α-chlorocarboxylic acid and a mesogenic phenol, and a derivative of citronellol of the formula (V)

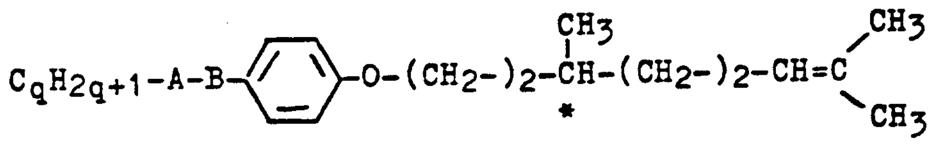 **(V)**

in which q denotes an integer from 6 to 16, A denotes an oxygen atom or a chemical bond, and B denotes a pyrimidine-2,5-diyl ring, it being possible for the phenylene ring bound to the pyrimidinediyl ring to be in the 2- or 5-position.

**17.** An electrooptical component, containing a liquid-crystalline mixture as claimed in any one of claims 1 to 16.

**Revendications**

**1.** Mélange mésomorphe contenant au moins deux 5-alkoxy-2(4-alkyloxy-phényl)-pyridines de formule générale (I) en tant que composants du mélange

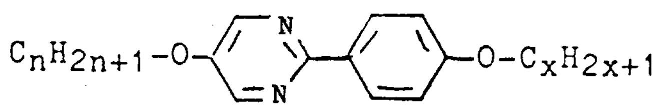 (I),

où les radicaux alkyle sont des radicaux alkyle à chaîne droite dans lesquels n est un nombre entier de 6 à 14 et X est un nombre entier de 2 à 14

**2.** Mélange mésomorphe selon la revendication 1, caractérisé en ce que n, dans les composants du mélange de formule générale (I), est constant, et que les indices s'écartent les uns des autres d'au moins Δx = 2.

**3.** Mélange mésomorphe selon la revendication 1 ou 2, caractérisé en ce qu'il contient au moins trois composants de mélange de formule générale (I), dans laquelle n est un nombre entier de 7 à 14.

**4.** Mélange mésomorphe selon l'une des revendications 1 à 3, caractérisé en ce qu'il contient de 20 à 90 & en moles, par rapport au mélange de l'ensemble des composants du mélange, des composants de mélange de formule générale (I).

**5.** Mélange mésomorphe selon l'une des revendications 1 à 4, caractérisé en ce qu'il contient au moins un cyclohexanecarboxylate de formule générale (II)

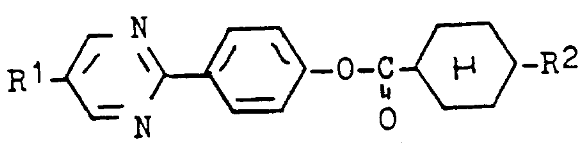 (II)

dans laquelle $R^1$ est un radical alkyle ayant de 10 à 16 atomes de carbone ou un radical alkyloxy ayant de 8 à 14 atomes de carbone, et $R^2$ est un radical alkyle ayant de 2 à 9 atomes de carbone.

**6.** Mélange mésomorphe selon la revendication 5, caractérisé en ce qu'il contient de 2 à 40 % en moles, par rapport au mélange de l'ensemble des composants du mélange, des composants de mélange de formule générale (II).

**7.** Mélange mésomorphe selon l'une des revendications 1 à 6, caractérisé en ce qu'il contient au moins un dérivé alcényloxyphénylpyrimidine de formule générale (III)

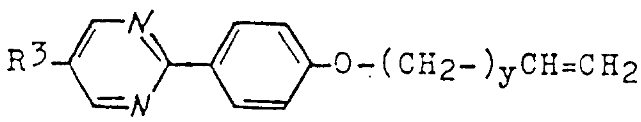

(III)

dans laquelle $R^3$ est une chaîne alkyle ayant de 7 à 16 atomes de carbone ou une chaîne alkyloxy ayant de 6 à 16 atomes de carbone, et Y est un nombre entier de 4 à 14.

**8.** Mélange mésomorphe selon la revendication 7, caractérisé en ce qu'il contient de 10 à 35 % en modes, par rapport au mélange de l'ensemble des composants du mélange, des composants de mélange de formule générale (III).

**9.** Mélange mésomorphe selon l'une des revendications 1 à 8, caractérisé en ce qu'il contient au moins un dérivé alkylpyrimidine-alkoxyphényle de formule générale (IV)

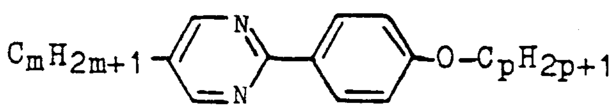

(IV)

dans laquelle m et P, indépendamment l'un de l'autre, représentent chacun un nombre entier de 6 à 14.

**10.** Mélange mésomorphe selon la revendication 9, caractérisé en ce qu'il contient de 10 à 25 % en moles du ou des composants du mélange de formule générale (IV) ou ayant les formules générales (III) et (IV), par rapport au mélange de tous les composants du mélange.

**11.** Mélange mésomorphe ferroélectrique constitué d'un mélange mésomorphe selon l'une des revendications 1 à 10, servant de matrice et d'au moins un dopant optiquement actif.

**12.** Mélange mésomorphe ferroélectrique selon la revendication 11, caractérisé en ce qu'il contient en tant que dopant au moins un composé optiquement actif choisi parmi l'ensemble comprenant :
a) les esters optiquement actifs des acides α-chlorocarboxyliques et des phénols mésogènes,
b) les esters optiquement actifs de la N-acylproline,
c) les esters optiquement actifs des acides 1,3-dioxolanne-4-carboxyliques,
d) les esters optiquement actifs des acides oxiranne-2-carboxyliques.

**13.** Mélange mésomorphe ferroélectrique selon la revendication 12, caractérisé en ce qu'il contient de 0,5 à 30 % en moles de dopant par rapport au mélange de l'ensemble des composants du mélange.

**14.** Mélange mésomorphe ferroélectrique selon la revendication 12 ou 13, caractérisé en ce qu'il contient un ester optiquement actif de formule

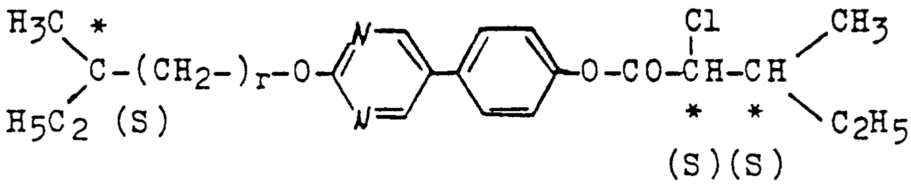

dans laquelle r est compris entre 4 et 8.

**15.** Mélange mésomorphe ferroélectrique selon l'une des revendications 11 à 14, caractérisé en ce qu'il contient un dopant supplémentaire optiquement actif, qui compense le pas de l'hélice induite.

**16.** Mélange mésomorphe ferroélectrique selon la revendication 15, caractérisé en ce qu'il contient un ester optiquement actif d'un acide a-chlorocarboxylique et d'un phénol mésogène, et un dérivé du citronellol de formule générale (V)

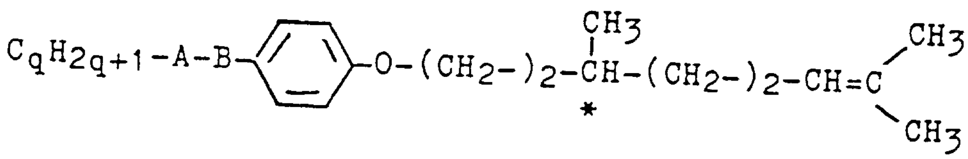

(V)

dans laquelle Q est un nombre entier de 6 à 16, A est un atome d'oxygène ou une liaison chimique, et B est un noyau pyrimidine-2,5-diyle, le noyau phénylène lié au noyau pyrimidinediyle pouvant se trouver en position 2 ou 5.

**17.** Composant électro-optique contenant un mélange mésomorphe selon l'une des revendications 1 à 16.